# EUROPEAN PATENT APPLICATION

(11) **EP 4 722 550 A1**
(43) Date of publication of application: **08.04.2026**
(21) Application number: 24815508.7
(22) Date of filing: 29.05.2024
(51) Int. Cl.: F16C 19/06, F16C 33/32, F16C 33/44, F16C 33/58, F16C 33/66

(54) **ROLLING BEARING AND METHOD FOR PRODUCING SAME**

(30) Priority: 30.05.2023 JP 2023088743
(71) Applicant: NSK LTD., Tokyo 141-8560 (JP)
(72) Inventor: MATSUZAKI, Yasuo, Fujisawa-shi, Kanagawa 251-8501 (JP); SUGAWARA, Suguru, Fujisawa-shi, Kanagawa 251-8501 (JP); MARUYAMA, Taisuke, Fujisawa-shi, Kanagawa 251-8501 (JP)
(74) Representative: Grünecker Patent- und Rechtsanwälte PartG mbB
(86) International application number: PCT/JP2024/019667
(87) International publication number: WO 2024/248027

(57) **Abstract**

The present invention provides a rolling bearing which achieves a long service life without increasing the cost. In this rolling bearing, a plurality of rolling bodies (3) are held between an outer ring (2) and an inner ring (1) at regular intervals in a rollable manner by means of a retainer (4), and this rolling bearing is filled with a lubricant G. The retainer (4) is a resin retainer, and at least one of the outer ring (2), the inner ring (1), and each of the rolling bodies (3) has a coating film that is derived from a constituent material of the resin retainer. It is preferable that the resin retainer is formed of a polyamide resin composition that contains glass fibers, and that the coating film is formed of a nitrogen compound that contains SiO₂.

## Description

### TECHNICAL FIELD

The present invention relates to a rolling bearing and a method for producing the rolling bearing.

### BACKGROUND ART

A rolling bearing is generally constructed by holding a plurality of rolling elements between an outer ring and an inner ring at regular intervals in a rollable manner by a cage, and filling a bearing space formed by the outer ring, the inner ring, and the rolling elements with a lubricant. As the cage, for example, as disclosed in Patent Literature 1, a cage made of metal such as iron is frequently used. The cage made of metal have the advantages of being excellent in strength and being easily manufactured by machining such as press working.

Further, in the rolling bearing, if the outer ring, the inner ring, and the rolling elements are all made of metal, there is a problem that the outer ring, the inner ring, and the rolling elements come into metallic contact with each other, causing seizing due to wear. Therefore, measures have been taken such as using ceramic rolling elements as in Patent Literature 2, or applying hardening treatment to an outer ring raceway surface, an inner ring raceway surface, and surfaces of the rolling elements as disclosed in Patent Literature 3.

### CITATION LIST

### PATENT LITERATURE

Patent Literature 1: JP2014-224608A
Patent Literature 2: JP2015-209936A
Patent Literature 3: JP2022-189424A

### SUMMARY OF INVENTION

### TECHNICAL PROBLEM

However, as shown in Test 1 described later, rolling bearings using a cage made of iron have a shorter service life than rolling bearings using a cage made of resin.

In addition, rolling elements made of ceramic are expensive, and in the case of applying the hardening treatment, a separate process is required, which leads to an increase in manufacturing cost.

Therefore, an object of the present invention is to provide a rolling bearing having a long service life without increasing cost.

### SOLUTION TO PROBLEM

The present inventors have found that when a cage made of resin is used, a film derived from a constituent material of the cage is formed on an inner ring, an outer ring, and rolling elements, and this led to the completion of the present invention. That is, the above object of the present invention is achieved by the following configuration [1] related to a rolling bearing.
[1] A rolling bearing in which a plurality of rolling elements are held between an outer ring and an inner ring at regular intervals in a rollable manner by a cage, and which is filled with a lubricant, wherein
   the cage is a resin cage, and
   at least one of the outer ring, the inner ring, and the rolling elements has a film that is derived from a constituent material of the resin cage.

Preferred embodiments of the present invention related to the rolling bearing relate to the following [2] to [5].
[2] In the rolling bearing according to [1], SiO₂ is present in the film.
[3] In the rolling bearing according to [1] or [2], the resin cage is made of a resin composition containing glass fibers.
[4] In the rolling bearing according to [3], a base resin of the resin composition is polyamide, and the film is made of a nitrogen compound that contains SiO₂.
[5] In the rolling bearing according to any one of [1] to [4], the lubricant is an additive-free lubricating oil or a grease composition with an additive-free lubricating oil as a base oil.

The above object of the present invention is achieved by the following configuration [6] related to a method for producing a rolling bearing.

[6] A method for producing a rolling bearing in which a plurality of rolling elements are held between an outer ring and an inner ring at regular intervals in a rollable manner by a cage and which is filled with a lubricant, the method including:
using a resin cage as the cage; and
by rotating the rolling bearing, forming a film derived from a constituent material of the resin cage on at least one of the outer ring, the inner ring, and the rolling elements.

Preferred embodiments of the present invention related to the method for producing a rolling bearing relate to the following [6] to [10].
[7] In the method for producing a rolling bearing according to [6], a film that contains SiO₂ is formed as the film.
[8] In the method for producing a rolling bearing according to [6] or [7], the resin cage contains glass fibers.
[9] In the method for producing a rolling bearing according to any one of [6] to [8], a base resin of the resin cage is polyamide, and the film is made of a nitrogen compound that contains SiO₂.
[10] In the method for producing a rolling bearing according to any one of [6] to [9], the rolling bearing is filled with, as the lubricant, an additive-free lubricating oil or a grease composition with an additive-free lubricating oil as a base oil.

### ADVANTAGEOUS EFFECTS OF INVENTION

According to the present invention, the resin cage is used and the film derived from the constituent material of the resin cage is formed on at least one of the outer ring, the inner ring, and the rolling elements. Therefore, direct contact between the inner and outer rings and the rolling elements is prevented, seizure is prevented, and a rolling bearing with a long service life is provided. In addition, simply by assembling the resin cage, the film can be formed along with the rotation of the bearing, so that a hardening treatment or the like is not required, and the manufacturing cost does not increase.

### BRIEF DESCRIPTION OF DRAWINGS

[FIG. 1] FIG. 1 is a cross-sectional view schematically showing a ball bearing, which is an example of a rolling bearing according to the present invention.
[FIG. 2] FIG. 2 is a schematic view showing a measuring device used for measuring a film thickness of an oil film on a rolling surface in an example.
[FIG. 3] FIG. 3 is a graph showing test results of a test bearing using an iron cage in Test 1, in which (A) shows a change in outer ring temperature over each rotation time, (B) shows a change in film thickness of a lubricating film in a gap between an inner ring raceway surface and a rolling surface of a ball over each rotation time, and (C) shows a change in impedance over each rotation time.
[FIG. 4] FIG. 4 is a graph showing test results of a test bearing using a resin cage in Test 1, in which (A) shows a change in outer ring temperature over each rotation time, (B) shows a change in film thickness of a lubricating film in a gap between an inner ring raceway surface and a rolling surface of a ball over each rotation time, and (C) shows a change in impedance over each rotation time.
[FIG. 5] FIG. 5 is a graph showing results of Test 2.

### DESCRIPTION OF EMBODIMENTS

Hereinafter, an embodiment of the present invention will be described in detail with reference to the drawings. It should be noted that the present invention is not limited to the embodiments described below, and can be freely modified and implemented without departing from the gist of the present invention.

### [Rolling Bearing]

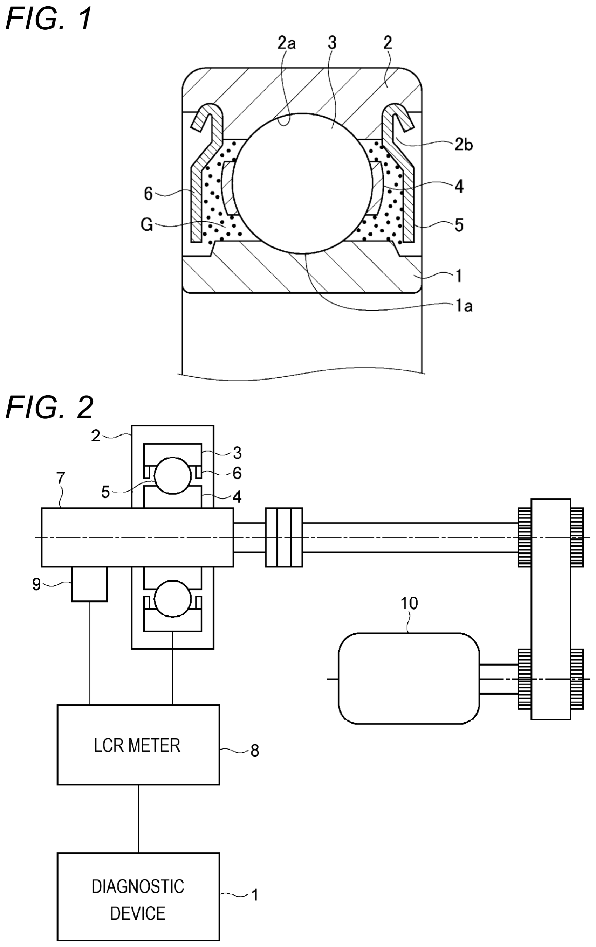

In the present invention, the type of the rolling bearing is not limited, and for example, a ball bearing shown in FIG. 1 can be exemplified. FIG. 1 is a cross-sectional view schematically showing a ball bearing. The illustrated ball bearing is generally constructed by holding a plurality of balls 3 serving as rolling elements in a cage 4 between an inner ring raceway surface 1a formed on an outer peripheral surface of an inner ring 1 and an outer ring raceway surface 2a formed on an inner peripheral surface of an outer ring 2, and sealing, by a seal 5, a lubricant G filled in a bearing space 6 formed by the inner ring 1, the outer ring 2, and the balls 3. Reference numeral 2b denotes a seal fitting groove provided in the outer ring 2.

The inner ring 1, the outer ring 2, and the balls 3 may all be made of metal, and it is not necessary to use balls made of ceramics or to apply hardening treatment.

In the present invention, a resin cage is used as the cage 4, and a film derived from a constituent material of the resin cage (hereinafter referred to as a "specific film") is formed on at least one of the inner ring 1, the outer ring 2, and the balls 3, more specifically, on at least one of the inner ring raceway surface 1a, the outer ring raceway surface 2a, and rolling surfaces of the balls 3. The specific film is formed when the resin cage wears as the bearing rotates, and wear powder made from the constituent material rolls onto the inner ring raceway surface 1a, the outer ring raceway surface 2a, and the rolling surfaces of the balls 3. Therefore, the inner ring 1, the outer ring 2 and the balls 3 do not come into direct contact with each other, and even if the inner ring 1, the outer ring 2, and the balls 3 are all made of metal, seizure is prevented, and the rolling bearing has a long service life. In other words, the specific film acts as a protective film to prevent seizure.

The resin cage is preferably made of a resin composition containing glass fibers for reinforcement. Accordingly, SiO₂ is present in the specific film.

Considering the heat resistance and strength of the resin cage, polyamide, polyphenylene sulfide, polyether ether ketone, polyamide imide, polyether imide, and the like are suitable as the base resin of the resin composition, and among them, polyamide is preferable because of its high versatility and low cost. When polyamide is used as the base resin, the specific film contains a nitrogen compound in addition to SiO₂.

There are no limitations on the film thickness of the specific film, and is preferably 1 nm or more, and more preferably 10 nm or more. If the film thickness is less than 1 nm, there is a risk that the effect of preventing image sticking may not be sufficient.

There is no limitation on the lubricant G, and it may be either a lubricating oil or a grease composition, but is preferably an additive-free material as the lubricating oil and a base oil of the grease composition. The term "additive-free" refers to a lubricating oil or a base oil that does not contain any of the various additives usually used in a lubricating oil or a base oil of a grease composition filled in a bearing, for example, antioxidants such as amine-based, phenol-based, sulfur-based, zinc dithiophosphate and zinc dithiocarbamate; rust inhibitors such as a sulfonic acid metal salt, ester-based, amine-based, naphthenic acid metal salt, and succinic acid derivatives; extreme pressure agents such as phosphorus-based agents, zinc dithiophosphate, and organic molybdenums; oiliness improvers such as a fatty acid and an animal or vegetable oil; and metal deactivators such as benzotriazole. In the present invention, the specific film is formed on the inner ring 1, the outer ring 2, and the balls 3, but if the lubricating oil or the base oil contains an additive, the additive is likely to have an adverse effect on the formation of the specific film.

There is no limitation on the type of the lubricating oil itself and the base oil itself, and any of mineral oil, synthetic oil, and natural oil may be used. The mineral oil may be one which has been refined by an appropriate combination of vacuum distillation, oil deasphalting, solvent extraction, hydrocracking, solvent dewaxing, sulfuric acid washing, clay refining, hydrorefining, and the like. Examples of the synthetic oil include hydrocarbon oils, aromatic oils, ester oils, and ether oils. Examples of the natural oil include fats and oils such as beef tallow, lard, soybean oil, rapeseed oil, rice bran oil, coconut oil, palm oil, and palm kernel oil, and hydrogenated products thereof. There is no limitation on the viscosity either, but considering the lubrication of the rolling bearing, a kinematic viscosity at 40°C of 5 mm²/s to 400 mm²/s is preferred.

### [Producing Method]

As described above, by using the resin cage, the specific film is formed on at least one of the inner ring raceway surface 1a, the outer ring raceway surface 2a, and the rolling surfaces of the balls 3 as the bearing rotates. At this time, the rotation conditions of the bearing, for example, the rotation speed, the temperature, the preload, and the rotation time are controlled so as to obtain a target film thickness, preferably 1 nm or more.

Further, as shown in Test 1 of Examples described later, in a case of using the resin cage, the impedance is maintained in a high state even if rotation of the bearing is stopped at a certain point in time. It is considered that this is because the specific film remains even after the bearing is stopped, giving the cage a longer service life than an iron cage.

Taking these factors into consideration, in a method for producing the rolling bearing, a resin cage is used as the cage 4, and after the bearing is assembled, the rotation conditions of the bearing are controlled so that the rotation is stopped when a predetermined film thickness is reached. In addition, it is preferable that the base resin of the resin cage is polyamide, and that the cage is filled with an additive-free lubricating oil or a grease composition whose base oil is an additive-free lubricating oil.

Therefore, according to the present invention, there are no restrictions on the materials of the inner ring 1, the outer ring 2, and the balls (rolling elements) 3, and no additional processes such as hardening treatment are required, so that the manufacturing cost is not increased.

### Examples

Hereinafter, the present invention will be further clarified with reference to Tests.

### (Test 1)

A resin cage made of polyamide 66 and an iron cage were prepared as cages for a ball bearing with bearing number "608", and a test bearing was assembled using these cages. As the lubricant, 1 mg of an additive-free poly-α-olefin oil (kinematic viscosity: 130 mm²/s, 40°C) was used. Then, a service life test was performed on both test bearings using a test device 200 shown in FIG. 2.

In the test device 200, a test bearing 210 supports a rotation shaft 220 in a rotatable manner. The rotation shaft 220 is rotated by a motor 230. The rotation shaft 220 is connected to an LCR meter 250 via a rotating connector 240. The rotating connector 240 is implemented using, for example, a carbon brush, and electrically connects the test bearing 210 to the LCR meter 250. The angular frequency ω and the AC voltage V of an AC power supply are input to the LCR meter 250, and the impedance of the test bearing 210 is output from the LCR meter 250. Then, the film thickness of a lubricating film is obtained using the information on the AC voltage V of the angular frequency ω and the relative permittivity at the high frequency limit.

In the test, an alternating current having a voltage of 0.2 V and a frequency of 1 MHz was applied to the test device 200, and the test bearing 210 was continuously rotated at 6,000 rpm in a state where an axial load of 32 N, a radial load of 0 N, and a maximum contact load of 1.0 GPa were applied to the test bearing 210, and a relationship between the rotation time and the film thickness of the lubricating film was obtained. In addition, the outer ring temperature of the test bearing was set to 150°C, and when the temperature rose by 10°C, it was determined that seizure had occurred, and the rotation was stopped.

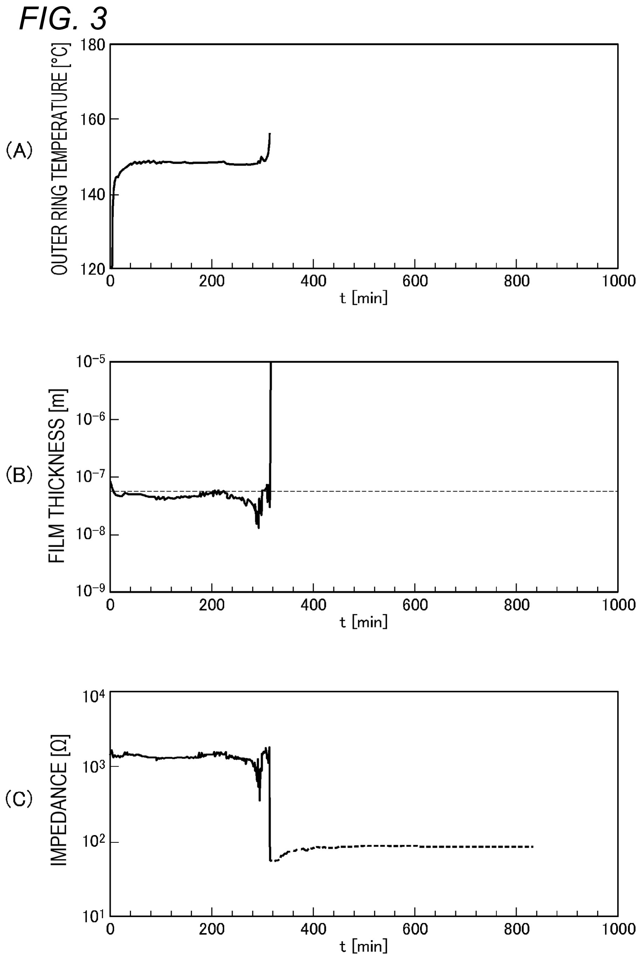

FIG. 3 shows test results of the test bearing using the iron cage, in which (A) shows a change in outer ring temperature over each rotation time t (min), (B) shows a change in film thickness of a lubricating film in a gap between the inner ring raceway surface and the rolling surface of the ball over each rotation time t (min), and (C) shows a change in impedance over each rotation time t (min).

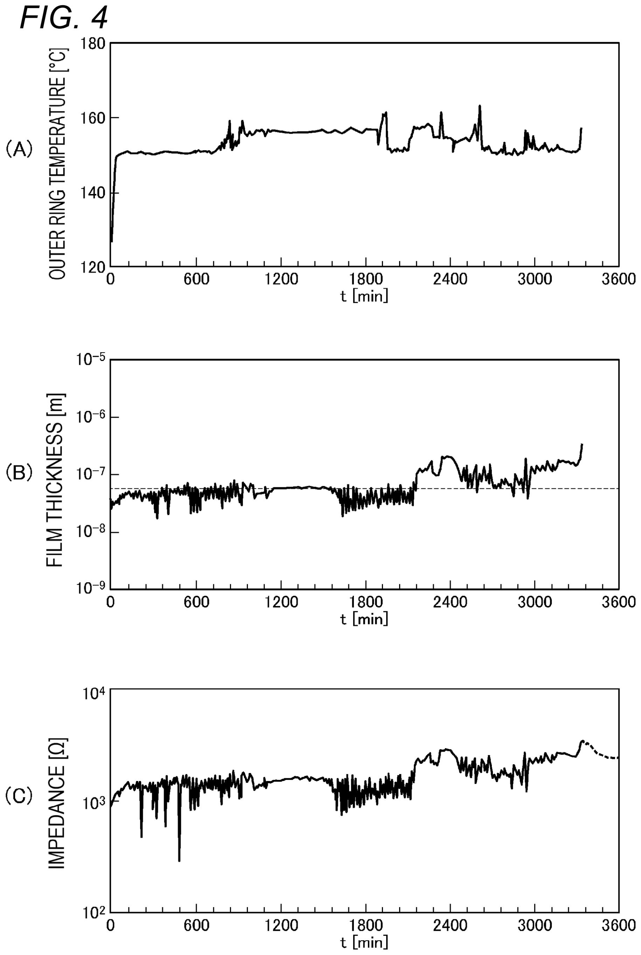

FIG. 4 shows test results of the test bearing using the resin cage, in which (A) shows a change in outer ring temperature over each rotation time t (min), (B) shows a change in film thickness of a lubricating film in a gap between the inner ring raceway surface and the rolling surface of the ball over each rotation time t (min), and (C) shows a change in impedance over each rotation time t (min).

As shown in (A) of FIG. 3, in the test bearing using the iron cage, after 300 minutes of rotation, the outer ring temperature of the test bearing started to rise more rapidly than initially, which was considered that the seizure occurred, and the rotation was stopped. Further, as shown in (B) of FIG. 3, when the rotation is stopped, the film thickness of the lubricating film is significantly reduced, and as shown in (C) of FIG. 3, the impedance also decreases significantly. The decrease in impedance means that an amount of oil film is small and an amount of metal-to-metal contact between the inner and outer rings and the balls is relatively large.

On the other hand, in the test bearing using the resin cage, as shown in (A) of FIG. 4, even after 3,500 minutes of rotation, an increase in the outer ring temperature is kept in 10 °C or less, and seizure does not occur. As shown in (B) of FIG. 4, an amount of the film tends to increase with rotation, and as shown in (C) of FIG. 4, the impedance also increases. Although the rotation was stopped after a lapse of 3,500 minutes, the measurement of the impedance was continued as shown in (C) of FIG. 4. As a result, the impedance remained high, and it was found that a sufficient amount of film remained even after the rotation was stopped.

In addition, when the inner ring raceway surfaces of both test bearings were observed using an SEM after the rotation was stopped, spotty deposits were observed on the rolling surface of the test bearing using the resin cage, whereas no deposits were observed on the test bearing using the iron cage. As a result of component analysis of the deposit, a component derived from the polyamide 66 of the resin cage was detected. This is considered to be because the deposits contained the component derived from the polyamide 66 from the resin cage, which acted like a protective film, preventing seizure and contributing to an extension of the lubrication service life.

### (Test 2)

A ball bearing with a bearing number of "608" was assembled using a resin cage made of a glass fiber-containing polyamide 66. As the lubricant, 1 mg of an additive-free poly-α-olefin oil (kinematic viscosity: 130 mm²/s, 40°C) was used. Then, using the test device 200 shown in FIG. 2, an alternating current having a voltage of 0.2 V and a frequency of 1 MHz was applied to the test device 200, an axial load of 32 N, a radial load of 0 N, and a maximum contact load of 1.0 GPa were applied to the assembled ball bearing, and the ball bearing was continuously rotated at 6,000 rpm for 3500 minutes in a state where the outer ring temperature was 150°C.

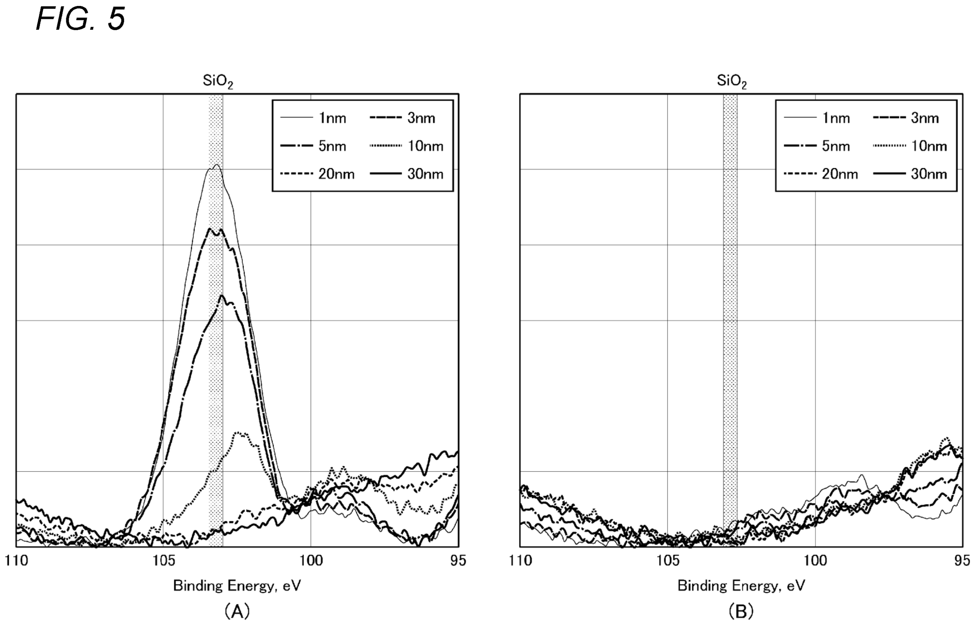

After the rotation was stopped, the inner ring raceway surface was observed using an SEM to select a position where the deposit was present, and electron spectroscopy for chemical analysis (ESCA) was performed in a depth direction. The results are shown in (A) of FIG. 5, and a clear peak derived from SiO₂ was detected up to a depth of 10 nm. The peak derived from SiO₂ is considered to be due to the glass fiber in the resin cage.

In addition, a similar ESCA analysis was also performed on a ball bearing that was not rotated immediately after assembly. As shown in (B) of FIG. 5, no peaks derived from SiO₂ were not detected.

Test 1 and Test 2 show that using a resin cage results in a longer service life than a metal cage, and a specific film derived from the constituent component of the resin cage is formed as the bearing rotates.

Although the embodiment and the variation thereof are described above with reference to the drawings, it is needless to mention that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on a Japanese patent application (No. 2023-088743) filed on May 30, 2023, contents of which are incorporated herein by reference.

### REFERENCE SIGNS LIST

1: inner ring
2: outer ring
3: ball (rolling element)
4: cage
5: seal
6: bearing space
G: lubricant

## Claims

1. A rolling bearing in which a plurality of rolling elements are held between an outer ring and an inner ring at regular intervals in a rollable manner by a cage, and which is filled with a lubricant,
wherein the cage is a resin cage, and
wherein at least one of the outer ring, the inner ring, and the rolling elements has a film that is derived from a constituent material of the resin cage.

2. The rolling bearing according to claim 1,
wherein SiO₂ is present in the film.

3. The rolling bearing according to claim 2,
wherein the resin cage is made of a resin composition containing glass fibers.

4. The rolling bearing according to claim 3,
wherein a base resin of the resin composition is polyamide, and the film is made of a nitrogen compound that contains SiO₂.

5. The rolling bearing according to claim 1,
wherein the lubricant is an additive-free lubricating oil or a grease composition with an additive-free lubricating oil as a base oil.

6. A method for producing a rolling bearing in which a plurality of rolling elements are held between an outer ring and an inner ring at regular intervals in a rollable manner by a cage and which is filled with a lubricant, the method comprising:
using a resin cage as the cage; and
by rotating the rolling bearing, forming a film derived from a constituent material of the resin cage on at least one of the outer ring, the inner ring, and the rolling elements.

7. The method for producing a rolling bearing according to claim 6,
wherein a film that contains SiO₂ is formed as the film.

8. The method for producing a rolling bearing according to claim 7,
wherein the resin cage contains glass fibers.

9. The method for producing a rolling bearing according to claim 8,
wherein a base resin of the resin cage is polyamide, and the film is made of a nitrogen compound that contains SiO₂.

10. The method for producing a rolling bearing according to claim 6,
wherein the rolling bearing is filled with, as the lubricant, an additive-free lubricating oil or a grease composition with an additive-free lubricating oil as a base oil.
